# EUROPEAN PATENT APPLICATION

(11) **EP 4 699 857 A1**
(43) Date of publication of application: **25.02.2026**
(21) Application number: 25196373.2
(22) Date of filing: 18.08.2025
(51) Int. Cl.: B60N 2/02, B60N 2/06

(54) **APPARATUS FOR MOVING SEAT RAIL FOR VEHICLE**

(30) Priority: 22.08.2024 KR 20240112969
(71) Applicant: Hyundai Transys Inc., Chungcheongnam-do 31930 (KR)
(72) Inventor: LEE, Young Sun, 18463 Hwaseong-si, Gyeonggi-do (KR)
(74) Representative: Viering, Jentschura & Partner mbB Patent- und Rechtsanwälte

(57) **Abstract**

An apparatus for moving a seat rail for a vehicle includes a spur gear having a first engagement portion provided on one surface of the spur gear, a pinion pin having one side outer-diameter portion rotatably coupled to an inner-diameter portion of the spur gear, a clutch drum positioned at an interval from the first engagement portion and positioned to be opposite to the spur gear, the clutch drum having a second engagement portion provided on one surface of the clutch drum and configured to engage with the first engagement portion, and an elastic member provided between the spur gear and the clutch drum.

## Description

### CROSS-REFERENCE TO RELATED APPLICATIONS

This application claims priority to and the benefit of Korean Patent Application No. 10-2024-0112969 filed in the Korean Intellectual Property Office on August 22, 2024, the entire contents of which are incorporated herein by reference.

### TECHNICAL FIELD

The present disclosure relates to an apparatus for moving a seat rail for a vehicle.

### BACKGROUND

In general, seats may be mounted in a vehicle. The vehicle seat may include a seatback configured to support a passenger's upper body, a seat cushion configured to support the passenger's lower body, and a headrest configured to support the passenger's head.

Seat rails, which are applied to second-row or third-row seats in sport utility vehicles (SUVs) or multi-purpose vehicles (MPVs), are applied as long rails longer in length than seat rails mounted in general passenger vehicles.

The vehicle seats may be classified into power seats and manual seats. The power seat may be moved to a desired position by an operation of a motor performed only by an operation of a switch. The manual seat may be moved by a manual operation.

A seat rail for a vehicle in the related art may include a lower rail and an upper rail. The lower rail is fixed to a floor panel. The upper rail is coupled to the lower rail, configured to be movable forward or rearward along the lower rail, and connected to the vehicle seat. In the case of the power seat in which the upper rail is moved by the motor, a plurality of gears (pinion gears, rack gears, etc.) configured to move the upper rail may be mounted in the lower rail.

However, the power-driven seat rail for a vehicle in the related art is not equipped with a separate control device. As such, it is difficult to quickly move or stop the vehicle seat.

### [Document of Related Art]

### [Patent Document]

(Patent Document 1) Korean Patent Application Laid-Open No. 10-2023-0161765 (published on November 28, 2023)

### SUMMARY OF THE DISCLOSURE

The present disclosure has been made in an effort to solve the above-mentioned problem, and an object of the present disclosure is to provide an apparatus for moving a seat rail for a vehicle, in which power, which is transmitted to a pinion pin, is transmitted to a spur gear via a clutch drum by an engagement operation of the clutch drum, such that the spur gear may move along a rack gear while rotating.

The present disclosure has also been made in an effort to provide an apparatus for moving a seat rail for a vehicle, in which a disengagement operation of a clutch drum prevents power, which is transmitted to a pinion pin, from being transmitted to a spur gear via the clutch drum, thereby restricting a rotation of the spur gear and preventing the spur gear from moving along a rack gear.

In order to achieve the above-mentioned object, the present disclosure provides an apparatus for moving a seat rail for a vehicle. The apparatus may include: a spur gear configured to engage with a rack gear and be movable along the rack gear, the spur gear having a first engagement portion disposed on one surface of the spur gear; a pinion pin, at least one portion of an outer-diameter portion of the pinion pin being coupled to an inner-diameter portion of the spur gear, the pinion pin being rotatable about an axis of the pinion pin relative to the spur gear; a clutch drum coupled to the at least one portion of the outer-diameter portion of the pinion pin and positioned to be opposite to the spur gear, the clutch drum having a second engagement portion disposed on one surface of the clutch drum, the second engagement portion being configured to engage with the first engagement portion; and an elastic member coupled to the at least one portion of the outer-diameter portion of the pinion pin and disposed between the spur gear and the clutch drum to maintain an interval between the spur gear and the clutch drum.

In addition, a key groove may be disposed on the at least one portion of the outer-diameter portion of the pinion pin, a key disposed on an inner-diameter portion of the clutch drum may be inserted into the key groove, and the key may be slidable along the key groove.

In addition, a damper may be coupled to the inner-diameter portion of the spur gear, the damper being rotatable relative to the spur gear, and a distal end portion of the at least one portion of the outer-diameter portion of the pinion pin may be coupled to an inner-diameter portion of the damper.

In addition, the clutch drum may be configured to be moved toward the first engagement portion by a pressing force of a pressing device.

The pressing device may be an actuator.

In addition, when the clutch drum moves toward the first engagement portion, the second engagement portion may be configured to engage with the first engagement portion of the spur gear, and the clutch drum may be configured to transmit a rotational force of the pinion pin, which is rotated by power transmitted from a power source, to the spur gear, such that the spur gear may move along the rack gear while rotating.

In addition, when the elastic member, which is compressed by being pushed by the clutch drum, is stretched to an original state and pushes the clutch drum in a direction opposite to the first engagement portion, the second engagement portion may be configured to be disengaged from the first engagement portion, and the clutch drum may be configured to not transmit a rotational force of the pinion pin, which is rotated by power transmitted from a power source, to the spur gear, such that a movement of the spur gear along the rack gear may be restricted.

In addition, the spur gear and the clutch drum may be positioned in a housing.

In addition, the housing may be configured to be mounted on an upper rail configured to move along a lower rail, and the rack gear may be configured to be inserted and coupled into the lower rail.

The elastic member may be a spring.

In addition, the key groove may extend in an axial direction of the pinion pin, such that the clutch drum may be slidable along the axial direction of the pinion pin.

In addition, the key groove may extend in an axial direction of the pinion pin to a distal end of the pinion pin.

In addition, the pinion pin and the clutch drum may be configured to rotate together about an axis of the pinion pin.

In addition, the one surface of the spur gear and the one surface of the clutch drum may face each other, the first engagement portion may protrude from the one surface of the spur gear in a first direction parallel to an axial direction of the pinion pin, and the second engagement portion may protrude from the one surface of the clutch drum in a second direction parallel to the axial direction of the pinion pin and opposite to the first direction.

In addition, the elastic member may be spaced apart from the first engagement portion and the second engagement portion in a radial direction of the pinion pin.

In addition, the housing may include an open portion at an outer-diameter portion of the housing, the spur gear protruding through the open portion to engage with the rack gear.

In addition, the housing may include: a main body having one open surface; and a cover coupled to the one open surface of the main body to prevent the spur gear from separating from the main body.

In addition, gear portions of the spur gear may protrude in a direction perpendicular to an axial direction of the pinion pin.

In addition, the pinion pin may penetrate a wall of the main body to be coupled to the clutch drum and the spur gear, the wall facing the cover.

In addition, the damper may be configured to be attached to or detached from the pinion pin, the damper and the pinion pin being configured to rotate together, the damper being configured to prevent direct contact between the pinion pin and the spur gear.

According to the present disclosure, power, which is transmitted to the pinion pin, is transmitted to the spur gear via the clutch drum by the engagement operation of the clutch drum, such that the spur gear may move along the rack gear while rotating.

In addition, according to the present disclosure, the disengagement operation of the clutch drum prevents power, which is transmitted to the pinion pin, from being transmitted to the spur gear via the clutch drum, thereby restricting the rotation of the spur gear and preventing the spur gear from moving along the rack gear.

The foregoing summary is illustrative only and is not intended to be in any way limiting. In addition to the illustrative aspects, embodiments, and features described above, further aspects, embodiments, and features will become apparent by reference to the drawings and the following detailed description.

### BRIEF DESCRIPTION OF THE DRAWINGS

FIG. 1 is a view illustrating a state in which an apparatus for moving a seat rail for a vehicle according to an exemplary embodiment of the present disclosure is mounted on a seat rail.
FIG. 2 is a perspective view of the apparatus for moving a seat rail for a vehicle according to the exemplary embodiment of the present disclosure.
FIG. 3 is a front view illustrating a state in which a cover is separated from a housing according to the exemplary embodiment of the present disclosure.
FIG. 4 is a perspective view illustrating a state in which a spur gear, a clutch drum, and a pinion pin according to the exemplary embodiment of the present disclosure are assembled.
FIG. 5 is a perspective view illustrating an engaged state between first engagement portions of the spur gear and second engagement portions of the clutch drum according to the exemplary embodiment of the present disclosure.
FIG. 6 is a side view illustrating the engaged state between the first engagement portions of the spur gear and the second engagement portions of the clutch drum according to the exemplary embodiment of the present disclosure.
FIG. 7 is a perspective view illustrating a disengaged state between the first engagement portions of the spur gear and the second engagement portions of the clutch drum according to the exemplary embodiment of the present disclosure.
FIG. 8 is a side view illustrating the disengaged state between the first engagement portions of the spur gear and the second engagement portions of the clutch drum according to the exemplary embodiment of the present disclosure.

It should be understood that the appended drawings are not necessarily to scale, presenting a somewhat simplified representation of various features illustrative of the basic principles of the disclosure. The specific design features of the present disclosure as disclosed herein, including, for example, specific dimensions, orientations, locations, and shapes will be determined in part by the particular intended application and use environment.

In the figures, reference numbers refer to the same or equivalent parts of the present disclosure throughout the several figures of the drawing.

### DETAILED DESCRIPTION

Hereinafter, exemplary embodiments of the present disclosure will be described in detail with reference to the accompanying drawings. First, in assigning reference numerals to constituent elements of the respective drawings, it should be noted that the same constituent elements will be designated by the same reference numerals, if possible, even though the constituent elements are illustrated in different drawings. In addition, in the description of the present disclosure, the specific descriptions of publicly known related configurations or functions will be omitted when it is determined that the specific descriptions may obscure the subject matter of the present disclosure. Further, the exemplary embodiments of the present disclosure will be described below, but the technical spirit of the present disclosure is not limited thereto and may, of course, be modified and variously carried out by those skilled in the art.

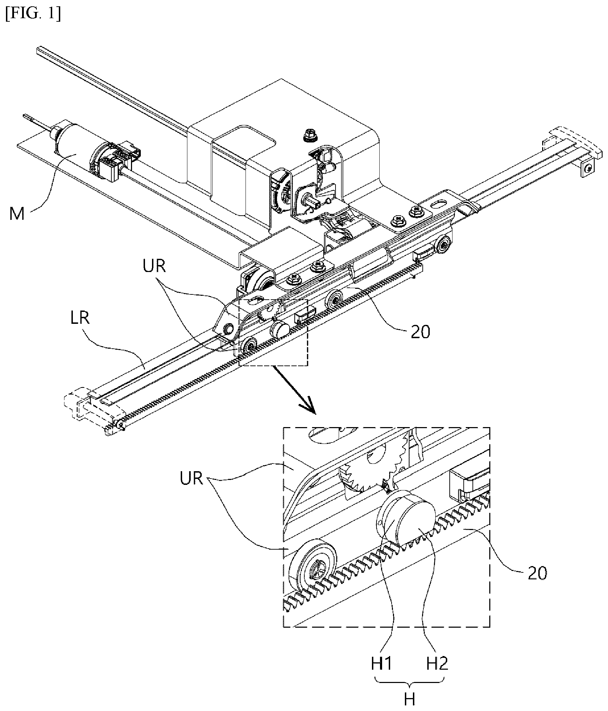

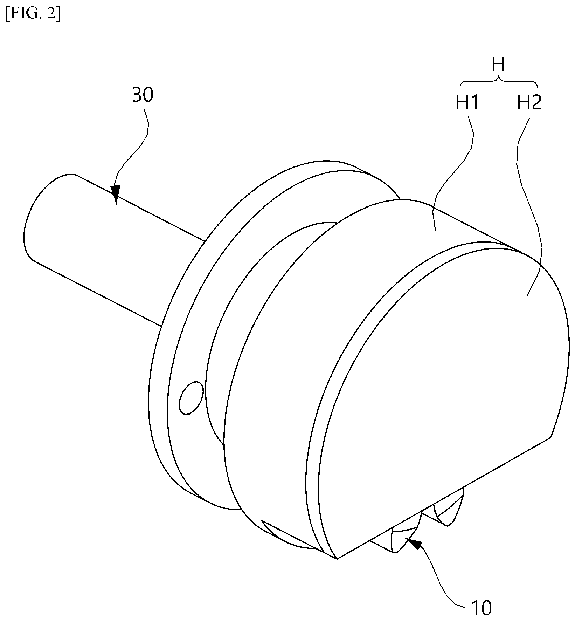

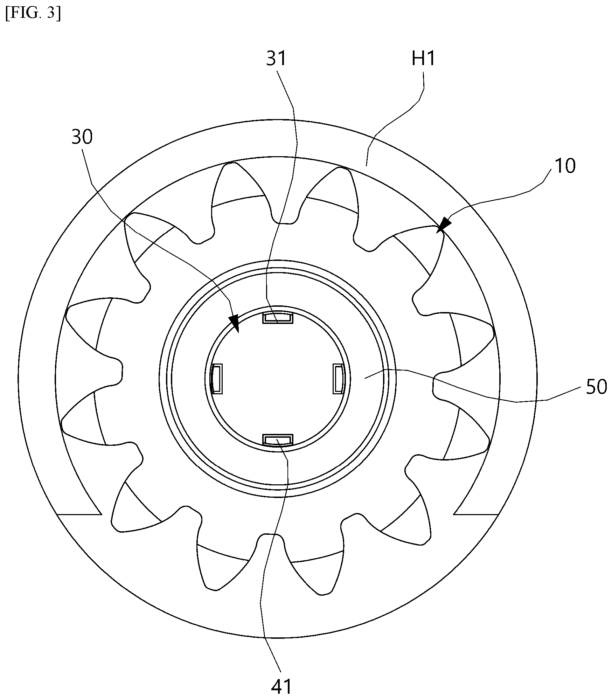

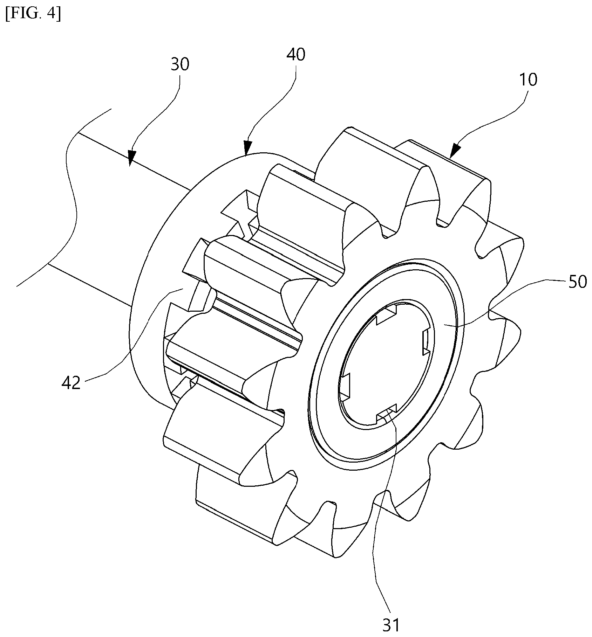

FIG. 1 is a view illustrating a state in which an apparatus for moving a seat rail for a vehicle according to an exemplary embodiment of the present disclosure is mounted on a seat rail. FIG. 2 is a perspective view of the apparatus for moving a seat rail for a vehicle according to the exemplary embodiment of the present disclosure. FIG. 3 is a front view illustrating a state in which a cover is separated from a housing according to the exemplary embodiment of the present disclosure. FIG. 4 is a perspective view illustrating a state in which a spur gear, a clutch drum, and a pinion pin according to the exemplary embodiment of the present disclosure are assembled.

As illustrated in FIGS. 1 to 4, the apparatus for moving a seat rail for a vehicle of the present disclosure may include a spur gear 10 configured to be movable along a rack gear 20, a pinion pin 30 connected to the spur gear 10, a clutch drum 40 coupled to the pinion pin 30, and an elastic member 60 positioned between the spur gear 10 and the clutch drum 40.

The spur gear 10 and the clutch drum 40 may be mounted in a housing H. The housing H may include a main body H1, and a cover H2 coupled to one surface of the main body H1. In a state in which the clutch drum 40 and the spur gear 10 are inserted and assembled into the main body H1, the cover H2 may be coupled to one open surface of the main body H1.

The cover H2 may serve to prevent the spur gear 10 from separating from the main body H1 and support one surface of the spur gear 10.

The main body H1 of the housing H may be mounted on an upper rail UR. The upper rail UR may be connected to a seat (not illustrated). The upper rail UR may move along a lower rail LR. The lower rail LR may be coupled to a floor panel in the vehicle. The rack gear 20 may be inserted and coupled into the lower rail LR.

The spur gear 10 may engage with the rack gear 20 and be moved along the rack gear 20 while rotating. First engagement portions 11 may be provided on one surface of the spur gear 10.

The pinion pin 30 may be connected to a power source M such as a motor. The pinion pin 30 may be rotated by power applied from the power source M.

One side outer-diameter portion of the pinion pin 30 may be rotatably coupled to an inner-diameter portion of the spur gear 10. Key grooves 31 may be provided in one side outer-diameter portion of the pinion pin 30.

A damper 50 may be rotatably inserted into the inner-diameter portion of the spur gear 10. An end portion of one side outer-diameter portion of the pinion pin 30 may be coupled to the inner-diameter portion of the damper 50.

For example, the damper 50 may be integrated with the pinion pin 30 or configured to be attached to or detached from the pinion pin 30.

The damper 50 may prevent the pinion pin 30 from coming into direct contact with the spur gear 10. In case that the damper 50 is integrated with the pinion pin 30, the entire pinion pin 30 needs to be replaced when the damper 50 is damaged. However, in the case of the structure in which the damper 50 may be attached to or detached from the pinion pin 30, only the damaged damper 50 may be replaced when the damper 50 is damaged.

Second engagement portions 42 may be provided on one surface of the clutch drum 40. The first engagement portion 11 and the second engagement portion 42 may constitute a dog clutch structure.

The clutch drum 40 may be coupled to one side outer-diameter portion of the pinion pin 30 and disposed to be opposite to the spur gear 10. Keys 41 may be provided on an inner-diameter portion of the clutch drum 40. The keys 41 of the clutch drum 40 may be inserted into the key grooves 31 of the pinion pin 30.

The clutch drum 40 may perform an engagement operation while being pressed by a pressing device A such as an actuator. When the clutch drum 40 performs the engagement operation, the keys 41 of the clutch drum 40 may slide along the key grooves 31 of the pinion pin 30. Any device, such as a hydraulic device as well as the actuator, capable of pressing the clutch drum 40, may be applied as the pressing device A.

As described above, because the keys 41 of the clutch drum 40 slide along the key grooves 31 of the pinion pin 30, the clutch drum 40 may stably slide toward the spur gear 10.

The elastic member 60 may be a spring. The elastic member 60 may be coupled to one side outer-diameter portion of the pinion pin 30. The elastic member 60 may be positioned between the spur gear 10 and the clutch drum 40. The elastic member 60 may elastically support the spur gear 10 and the clutch drum 40 to maintain a predetermined interval between the spur gear 10 and the clutch drum 40.

The elastic member 60 may be compressed by being pushed by the clutch drum 40 when the clutch drum 40 performs the engagement operation. When a pressing force, which presses the clutch drum 40, is eliminated, the elastic member 60 may push the clutch drum 40 in a disengagement direction while being stretched from the compressed state to an original state.

Next, the engagement operation of the present disclosure will be described.

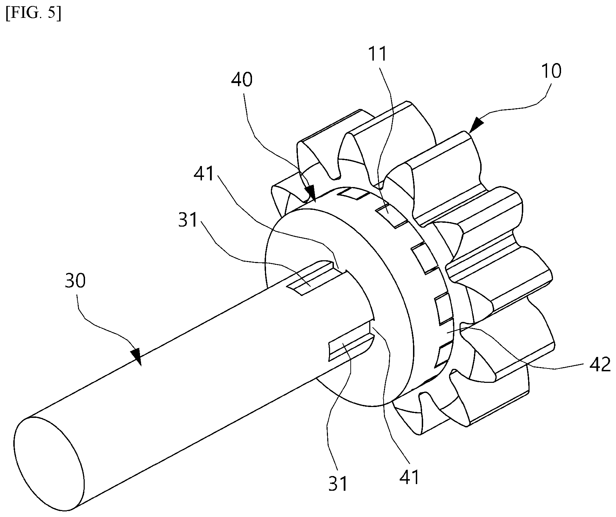

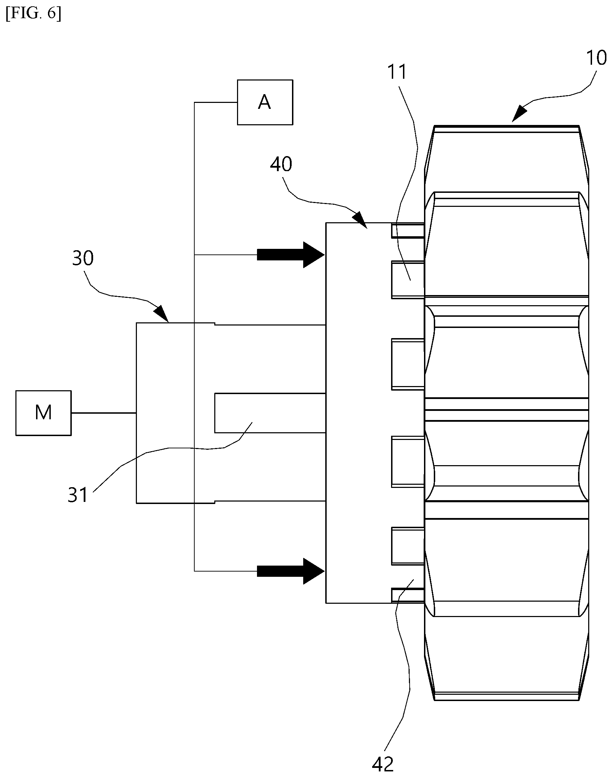

FIG. 5 is a perspective view illustrating an engaged state between the first engagement portions of the spur gear and the second engagement portions of the clutch drum according to the exemplary embodiment of the present disclosure. FIG. 6 is a side view illustrating the engaged state between the first engagement portions of the spur gear and the second engagement portions of the clutch drum according to the exemplary embodiment of the present disclosure.

As illustrated in FIGS. 5 and 6, the clutch drum 40 may move toward the first engagement portions 11 while being pressed by the pressing device A.

As the clutch drum 40 moves toward the first engagement portions 11, the second engagement portions 42 may engage with the first engagement portions 11.

The pinion pin 30 may rotate when power from the power source M, such as a motor, is transmitted to the pinion pin 30 in the engaged state between the first engagement portions 11 and the second engagement portions 42.

Because the keys 41 of the clutch drum 40 are inserted and assembled into the key grooves 31 of the pinion pin 30, a rotational force of the pinion pin 30 may be transmitted to the clutch drum 40, such that the clutch drum 40 may rotate.

In the state in which the first engagement portions 11 of the spur gear 10 and the second engagement portions 42 of the clutch drum 40 engage with one another, the rotational force of the clutch drum 40 may be transmitted to the spur gear 10, such that the spur gear 10 may rotate.

The spur gear 10 may move forward or rearward along the rack gear 20 while rotating.

Next, a disengagement operation of the present disclosure will be described.

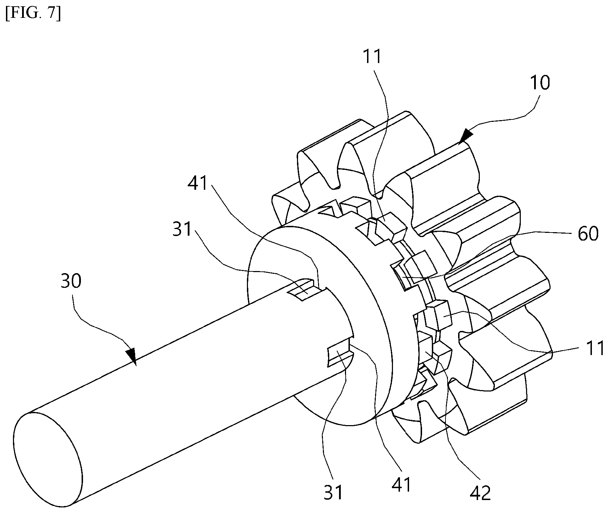

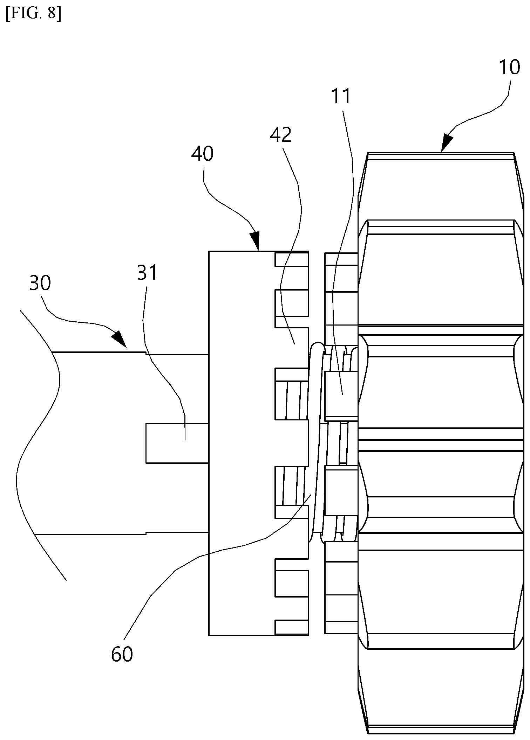

FIG. 7 is a perspective view illustrating a disengaged state between the first engagement portions of the spur gear and the second engagement portions of the clutch drum according to the exemplary embodiment of the present disclosure. FIG. 8 is a side view illustrating the disengaged state between the first engagement portions of the spur gear and the second engagement portions of the clutch drum according to the exemplary embodiment of the present disclosure.

As illustrated in FIGS. 7 and 8, when the pressing force of the pressing device A is eliminated, the elastic member 60 pushed and compressed by the clutch drum 40 may be stretched to the original state.

When the elastic member 60 is stretched to the original state, the clutch drum 40 may move in the disengagement direction while being pushed by the elastic member 60.

When the clutch drum 40 moves in the disengagement direction, the first engagement portions 11 of the spur gear 10 and the second engagement portions 42 of the clutch drum 40 may be disengaged.

In the disengaged state between the first engagement portions 11 and the second engagement portions 42, the spur gear 10 cannot rotate because the rotational force of the pinion pin 30 is not transmitted to the spur gear 10 via the clutch drum 40 even though power from the power source M, such as a motor, is transmitted to the pinion pin 30.

The spur gear 10 cannot move along the rack gear 20 because the spur gear 10 does not rotate.

For example, when a passenger pushes the seat (not illustrated) in a state in which the spur gear 10 is not rotating, an external force may be transmitted to the spur gear 10, which is not rotating, because the seat (not illustrated) is connected to the upper rail UR and the housing H is mounted on the upper rail UR. In case that the external force applied to the spur gear 10 is higher than a frictional engagement force between the spur gear 10 and the rack gear 20, the spur gear 10 may rotate, and the spur gear 10 may move along the rack gear 20.

As described above, according to the present disclosure, the power transmitted to the pinion pin is transmitted to the spur gear via the clutch drum by the engagement operation of the clutch drum, such that the spur gear may move along the rack gear while rotating. In addition, according to the present disclosure, the disengagement operation of the clutch drum prevents power, which is transmitted to the pinion pin, from being transmitted to the spur gear via the clutch drum, thereby restricting the rotation of the spur gear and preventing the spur gear from moving along the rack gear.

The above description is simply given for illustratively describing the technical spirit of the present disclosure, and those skilled in the art to which the present disclosure pertains will appreciate that various modifications, changes, and substitutions are possible without departing from the essential characteristics of the present disclosure. Accordingly, the embodiments disclosed in the present disclosure and the accompanying drawings are intended not to limit but to describe the technical spirit of the present disclosure, and the scope of the technical spirit of the present disclosure is not limited by the embodiments and the accompanying drawings. The protective scope of the present disclosure should be construed based on the following claims, and all the technical spirit in the equivalent scope thereto should be construed as falling within the scope of the present disclosure.

As described above, the exemplary embodiments have been described and illustrated in the drawings and the specification. The exemplary embodiments were chosen and described in order to explain certain principles of the disclosure and their practical application, to thereby enable others skilled in the art to make and utilize various exemplary embodiments of the present disclosure, as well as various alternatives and modifications thereof. As is evident from the foregoing description, certain aspects of the present disclosure are not limited by the particular details of the examples illustrated herein, and it is therefore contemplated that other modifications and applications, or equivalents thereof, will occur to those skilled in the art. Many changes, modifications, variations and other uses and applications of the present construction will, however, become apparent to those skilled in the art after considering the specification and the accompanying drawings. All such changes, modifications, variations and other uses and applications which do not depart from the spirit and scope of the disclosure are deemed to be covered by the disclosure which is limited only by the claims which follow.

### [Description of Reference Numerals]

10: Spur gear
11: First engagement portion
20: Rack gear
30: Pinion pin
31: Key groove
40: Clutch drum
41: Key
42: Second engagement portion
50: Damper
60: Elastic member
A: Pressing device
M: Power source
H: Housing
H1: Main body
H2: Cover
UR: Upper rail
LR: Lower rail

## Claims

1. An apparatus for moving a seat rail for a vehicle, the apparatus comprising:
a spur gear configured to engage with a rack gear and be movable along the rack gear, the spur gear having a first engagement portion disposed on one surface of the spur gear;
a pinion pin, at least one portion of an outer-diameter portion of the pinion pin being coupled to an inner-diameter portion of the spur gear, the pinion pin being rotatable about an axis of the pinion pin relative to the spur gear;
a clutch drum coupled to the at least one portion of the outer-diameter portion of the pinion pin and positioned to be opposite to the spur gear, the clutch drum having a second engagement portion disposed on one surface of the clutch drum, the second engagement portion being configured to engage with the first engagement portion; and
an elastic member coupled to the at least one portion of the outer-diameter portion of the pinion pin and disposed between the spur gear and the clutch drum to maintain an interval between the spur gear and the clutch drum.

2. The apparatus of claim 1, wherein a key groove is disposed on the at least one portion of the outer-diameter portion of the pinion pin, a key disposed on an inner-diameter portion of the clutch drum is inserted into the key groove, and the key is slidable along the key groove, wherein, optionally, the pinion pin and the clutch drum are configured to rotate together about an axis of the pinion pin.

3. The apparatus of claim 1 or 2, wherein a damper is coupled to the inner-diameter portion of the spur gear, the damper being rotatable relative to the spur gear, and a distal end portion of the at least one portion of the outer-diameter portion of the pinion pin is coupled to an inner-diameter portion of the damper.

4. The apparatus of any one of claims 1 to 3, wherein the clutch drum is configured to be moved toward the first engagement portion by a pressing force of a pressing device, wherein, optionally, the pressing device is an actuator.

5. The apparatus of any one of claims 1 to 4, wherein when the clutch drum moves toward the first engagement portion, the second engagement portion is configured to engage with the first engagement portion of the spur gear, and the clutch drum is configured to transmit a rotational force of the pinion pin, which is rotated by power transmitted from a power source, to the spur gear, such that the spur gear moves along the rack gear while rotating.

6. The apparatus of any one of claims 1 to 5, wherein when the elastic member, which is compressed by being pushed by the clutch drum, is stretched to an original state and pushes the clutch drum in a direction opposite to the first engagement portion, the second engagement portion is configured to be disengaged from the first engagement portion, and the clutch drum is configured to not transmit a rotational force of the pinion pin, which is rotated by power transmitted from a power source, to the spur gear, such that a movement of the spur gear along the rack gear is restricted.

7. The apparatus of any one of claims 1 to 6, wherein the spur gear and the clutch drum are positioned in a housing,
wherein, optionally, the housing is configured to be mounted on an upper rail configured to move along a lower rail, and the rack gear is configured to be inserted and coupled into the lower rail.

8. The apparatus of any one of claims 1 to 7, wherein the elastic member is a spring.

9. The apparatus of claim 2 or any one of claims 3 to 8 in combination with claim 2, wherein the key groove extends in an axial direction of the pinion pin, such that the clutch drum is slidable along the axial direction of the pinion pin,
or
wherein the key groove extends in an axial direction of the pinion pin to a distal end of the pinion pin.

10. The apparatus of any one of claims 1 to 9,
wherein the one surface of the spur gear and the one surface of the clutch drum face each other,
wherein the first engagement portion protrudes from the one surface of the spur gear in a first direction parallel to an axial direction of the pinion pin, and
wherein the second engagement portion protrudes from the one surface of the clutch drum in a second direction parallel to the axial direction of the pinion pin and opposite to the first direction.

11. The apparatus of any one of claims 1 to 10, wherein the elastic member is spaced apart from the first engagement portion and the second engagement portion in a radial direction of the pinion pin.

12. The apparatus of claim 7 or any one of claims 8 to 11 in combination with claim 7, wherein the housing includes an open portion at an outer-diameter portion of the housing, the spur gear protruding through the open portion to engage with the rack gear.

13. The apparatus of claim 7 or 12, wherein the housing includes:
a main body having one open surface;
a cover coupled to the one open surface of the main body to prevent the spur gear from separating from the main body.

14. The apparatus of any one of claims 1 to 13, wherein gear portions of the spur gear protrude in a direction perpendicular to an axial direction of the pinion pin,
wherein, optionally, the pinion pin penetrates a wall of the main body to be coupled to the clutch drum and the spur gear, the wall facing the cover.

15. The apparatus of claim 3 or any one of claims 4 to 14 in combination with claim 3, wherein the damper is configured to be attached to or detached from the pinion pin, the damper and the pinion pin being configured to rotate together, the damper being configured to prevent direct contact between the pinion pin and the spur gear.
